Europäisches Patentamt

European Patent Office

Office européen des brevets

(11) Veröffentlichungsnummer: **0 227 586**
**B1**

(12) **EUROPÄISCHE PATENTSCHRIFT**

(45) Veröffentlichungstag der Patentschrift:
04.07.90

(21) Anmeldenummer: 86730203.6

(22) Anmeldetag: 05.12.86

(51) Int. Cl.⁵: **H02B 11/00, H02B 11/12,**
**H01H 71/10, H01H 9/22**

(54) **Elektrische Schalteinrichtung mit einem Einschubrahmen und einem darin einsetzbaren Schaltgerät.**

(30) Priorität: 20.12.85 DE 3545779
08.04.86 DE 3612120
08.04.86 DE 3612118

(43) Veröffentlichungstag der Anmeldung:
01.07.87 Patentblatt 87/27

(45) Bekanntmachung des Hinweises auf die Patenterteilung:
04.07.90 Patentblatt 90/27

(84) Benannte Vertragsstaaten:
DE FR GB IT SE

(56) Entgegenhaltungen:
EP-A- 0 035 083
EP-A- 0 045 545
DE-A- 1 949 932
DE-B- 1 029 070
FR-A- 2 416 575
GB-A- 2 128 810
US-A- 2 678 976
US-A- 2 914 635
US-A- 3 783 209
US-A- 4 002 865

(73) Patentinhaber: Siemens Aktiengesellschaft,
Wittelsbacherplatz 2, D-8000 München 2(DE)

(72) Erfinder: Bohnen, Peter, Ing. grad., Solmsstrasse 22,
D-1000 Berlin 61(DE)
Erfinder: Godesa, Ludvik, Eisenacher Strasse 115,
D-1000 Berlin 30(DE)
Erfinder: Kugler, Reinhard, Dipl.-Ing., Maffeistrasse 22,
D-1000 Berlin 49(DE)
Erfinder: Marquardt, Ulrich, Ing. grad., Senftenberger
Ring 93, D-1000 Berlin 26(DE)

**Beschreibung**

Die Erfindung betrifft eine elektrische Schalteinrichtung mit einem Einschubrahmen und einem in den Einschubrahmen einsetzbaren Schaltgerät mit folgenden Merkmalen:
Das Schaltgerät weist eine zur Betätigung seines Kontaktapparates dienende verklinkbare Antriebsvorrichtung auf;
ferner ist der Einschubrahmen mit einem mit dem Schaltgerät kuppelbaren, zum Verfahren des Schaltgerätes eine Gewindespindel aufweisenden Verstellantrieb ausgerüstet.

Eine solche Schalteinrichtung ist beispielsweise durch die US-A-4 112 269 bekannt geworden. Der Einschubrahmen und sein Verstellantrieb sind dabei üblicherweise so ausgelegt, daß das Schaltgerät drei Positionen einnehmen kann, nämlich eine Betriebsstellung, in der Anschlußleiter des Schaltgerätes im Eingriff mit einer ortsfesten Trennkontakteinrichtung stehen, eine Teststellung, in der die Anschlußleiter des Schaltgerätes aus der Trennkontaktanordnung herausgezogen sind, jedoch sämtliche Hilfsleitungen des Schaltgerätes mit dem ortsfesten Teil der Schalteinrichtung verbunden sind, sowie eine Trennstellung, in der alle elektrischen Verbindungen zwischen dem Schaltgerät und dem Einschubrahmen unterbrochen sind. Der Übergang von der Betriebsstellung zur Teststellung ist dann mit einer beträchtlichen Gefahr für den Bedienenden und die Schalteinrichtung verbunden, wenn das Schaltgerät eingeschaltet ist und ein Laststrom fließt. Es kann dann zu einer mehr oder minder starken Lichtbogenbildung zwischen den Anschlußleitern des Schaltgerätes und der Trennkontaktanordnung kommen. An sich bereitet es keine Schwierigkeiten, die Auslösung des Schaltgerätes vor der Trennung seiner Anschlußleiter von der Trennkontaktanordnung auf elektrischem Wege sicherzustellen; beispielsweise kann die Verschiebung des Schaltgerätes durch einen ausreichend empfindlichen Tastschalter erfaßt und zur Betätigung eines Arbeitsstromauslösers des Schaltgerätes benutzt werden. Dies setzt jedoch voraus, daß die Stromversorgung des Arbeitsstromauslösers vollkommen ungestört und ständig betriebsbereit ist.

Der Erfindung liegt hiervon ausgehend die Aufgabe zugrunde, eine unabhängig von einer Hilfsstromversorgung zwangsläufig wirkende mechanische Einrichtung zu schaffen, die sicherstellt, daß das Verfahren und die Entnahme des Schaltgerätes aus der Schaltanlage nur im entspannten Zustand geschehen kann. Insbesondere muß daher das Schaltgerät beim Verfahren ausgeschaltet sein. Ferner muß bei der Entnahme aus der Schaltanlage auch der gegebenenfalls zum Einschalten vorgesehene Energiespeicher entladen sein.

Diese Aufgabe wird gemäß der Erfindung durch folgende weitere Merkmale gelöst:
an dem Einschubrahmen ist ein durch das zur Betätigung der Gewindespindel vorgesehene Werkzeug betätigbares Auslöseglied angeordnet;
ferner ist an dem Schaltgerät ein mit einem Auslöseorgan der Verklinkungseinrichtung der Antriebsvorrichtung einerseits und mit dem Auslöseglied andererseits zusammenwirkendes Kupplungsglied angeordnet. Die Auslösung des Schaltgerätes erfolgt somit zwangsläufig noch vor einer Bewegung des Schaltgerätes, da das zur Bedienung der Gewindespindel dienende Werkzeug zunächst das Auslöseglied betätigt. Es empfiehlt sich, dem Auslöseglied eine durch den Verstellantrieb zur Rückstellung freigebbare Verklinkungseinrichtung zuzuordnen. Dann verharrt das Auslöseglied solange in seiner betätigten Stellung, bis der Verstellantrieb betätigt und das Schaltgerät verfahren worden ist. Wie im folgenden gezeigt wird, ist diese mechanische Abhängigkeit durch einfache und robuste Teile zu verwirklichen.

Um eine gewünschte Reihenfolge von Bedienungsschritten sicherzustellen, empfiehlt es sich, die Verklinkungseinrichtung des Auslösegliedes mit der Verriegelung des Schaltgerätes in seinen unterschiedlichen Stellungen in der Weise zu verbinden, daß in die Bewegungsbahn des Auslösegliedes durch einen zur Freigabe des Verstellantriebes dienenden Entsperrungsschieber ein Sperrglied schwenkbar ist. Dieses Sperrglied kann als Blattfeder mit einer schräg zu der Verschiebungsrichtung des Auslösegliedes stehenden Zunge ausgebildet sein, wobei das Auslöseglied mit einer über die Zunge drückbaren Nase verbunden ist. Auf diese Weise werden bereits vorhandene, dem Verstellantrieb zugeordnete Teile für die Zwecke der Erfindung mitbenutzt. Im einzelnen kann dies durch folgende Merkmale geschehen:
Die Blattfeder ist an einem Steuerhebel angebracht, der mittels eines Lagerbolzens in einem Langloch der Bodenplatte des Einschubrahmens in der Fahrrichtung des Schaltgerätes verschiebbar und relativ dazu schwenkbar geführt ist;
der Steuerhebel ist gelenkig mit einem Riegel verbunden, der quer zur Fahrrichtung des Schaltgerätes an einer als Widerlager für die Gewindespindel dienenden Traverse angebracht ist;
der Riegel besitzt einen Führungsstift zum Eingreifen in eine in der Bodenplatte befindliche Kulisse;
der Steuerhebel ist gelenkig mit einem Hilfshebel verbunden, der eine mit einem Entsperrungsschieber im Sinne einer gegenseitigen Sperrung im betätigten Zustand zusammenwirkende Arbeitsfläche aufweist und
die Kulisse besitzt Ausnehmungen für unterschiedliche Positionen des Schaltgerätes in dem Einschubrahmen und Steuerkurven zur selbsttätigen Rückstellung des Steuerhebels und des Entsperrungsschiebers beim Verfahren des Schaltgerätes. Diese Einrichtung hat die Aufgabe, die Gewindespindel des Verstellantriebes erst dann zur Drehung freizugeben, wenn der Entsperrungsschieber betätigt ist. Gleichzeitig werden Meldeschalter betätigt, die diesen Zustand signalisieren.

Das Auslöseglied für das Schaltgerät kann einen dem Profil des bedienungsseitigen Kopfstückes der Gewindespindel angepaßten, durch das Werkzeug zwangsläufig zu beaufschlagenden Mitnehmer aufweisen. Da sich der Mitnehmer so anbringen läßt, daß er von dem Werkzeug eher als das Kopfstück der Gewindespindel erfaßt wird, kann das Verfahren des Schaltgerätes nicht eher beginnen, als die Auslösung stattgefunden hat.

Das Auslöseglied kann als parallel zu der Gewindespindel angeordneter Schieber ausgebildet und durch eine Führungsstange bewegbar sein, die in einer als Widerlager der Gewindespindel dienenden bewegbaren Traverse und einer ein Widerlager der Gewindespindel bildenden ortsfesten Traverse geradlinig verschiebbar geführt ist. Auch im Zusammenhang mit dem Auslöseglied und seiner Führungsstange werden somit Teile mitbenutzt, die als Bestandteil des Verstellantriebes bereits vorhanden sind.

Aufgrund der Zuordnung der beschriebenen Teile ergibt sich normalerweise ein Bewegungsablauf, bei dem das Auslöseglied in das Innere des Einschubrahmens hineingeschoben, d. h. von der Vorderkante der bewegbaren Traverse wegbewegt wird. Insbesondere bei einer Ausführung mit direkter Einwirkung des Auslösegliedes auf das Kupplungsglied des Schaltgerätes kann es jedoch vorteilhaft sein, ein umgekehrte Bewegungsrichtung vorzusehen. Nach einer Weiterbildung der Erfindung kann ein solcher geänderter Bewegungsablauf dadurch bewirkt werden, daß das Auslöseglied des Einschubrahmens eine Steuerkurve aufweist, in die ein Zapfen eines an der bewegbaren Traverse schwenkbar gelagerten Druckstückes eingreift und daß eine Nase des Druckstückes einer Arbeitsfläche eines parallel zu dem Auslöseglied angeordneten und verschiebbar geführten Hilfsauslösegliedes derart gegenüberstehend angeordnet ist, daß eine Verschiebung des Auslösegliedes in eine gegenläufige Bewegung des Hilfsauslösegliedes umgeformt wird. Die Steuerkurve kann dabei als ein etwa viertelkreisförmiger Schlitz ausgebildet sein. Man erreicht hierdurch bei einer verhältnismäßig geringen Verschiebung des Auslösegliedes eine relativ große Verschiebung des Hilfsauslösegliedes. Damit wird eine sichere Betätigung eines Auslöseorgans des Schaltgerätes erzielt.

Durch ein sinngemäßes Zusammenwirken des Schaltgerätes mit dem Verstellantrieb ist auch zu erreichen, daß das Schaltgerät beim Herausnehmen aus dem Einschubrahmen nur in vollkommen entspanntem Zustand in die Hände des Bedienenden gelangt. Dies wird dadurch erreicht, daß ein zum Einschalten des Kontaktapparates des Schaltgerätes dienender Energiespeicher zwangsläufig entspannt wird, wenn das Schaltgerät aus dem Einschubrahmen entfernt wird. Hierzu können Teile vorgesehen sein, die sinngemäß den bereits beschriebenen Teilen entsprechen. Insbesondere kann das Schaltgerät ein mit einem Verklinkungsorgan des Energiespeichers zusammenwirkenden Kupplungsglied aufweisen, das mittels eines Tastgliedes und einer an dem Verstellantrieb befindlichen Tastfläche bei mit dem Verstellantrieb gekuppelten Schaltgerät in einer unwirksamen Stellung gehalten wird. Als Tastfläche kann dabei die Stirnfläche der als bewegliches Widerlager dienenden Traverse des Verstellantriebes dienen.

Weitere Ausgestaltungen der Erfindung betreffen die Übertragung der Auslösebewegungen auf die Auslöseorgane an dem Schaltgerät selbst. Hierzu kann das Kupplungsglied als längsverschiebbare Stange ausgebildet sein, die durch ein am Sockel (Querträger) des Schaltgerätes angeordnetes und mit dem Auslöseglied zusammenwirkendes Umlenkgetriebe (Tasthebel, Hebel, Welle) antreibbar ist und die mit einem Bereich veränderlicher Breite zwischen einem ortsfesten Führungsstift eines in Richtung auf das Auslöseorgan des Schaltgerätes bewegbaren und wahlweise von Hand betätigbaren Schlittens und einem an dem Schlitten angeordneten Stift eingreift. Die mit einem Bereich veränderlicher Breite versehene Stange wirkt keilartig auf den Schlitten ein. Durch geeignete Wahl des Keilwinkels ist ein gutes Übertragungsverhalten zu erzielen, wie Versuche gezeigt haben.

Durch das Umlenkgetriebe ist .die Forderung erfüllbar, daß der Auslösevorgang im Verlauf einer relativ geringfügigen Verschiebung des Schaltgerätes in der Schaltanlage bzw. in dem Einschubträger erfolgen soll oder bei feststehendem Schaltgerät ein kurzer Betätigungshub ausreichen soll.

Ferner kann es vorteilhaft sein, den Bereich veränderlicher Breite der Stange spiegelbildlich zu einer quer zu der Längserstreckung der Stange verlaufenden Mittellinie auszubilden.· Auf diese Weise wird nämlich die Möglichkeit geschaffen, den Schlitten sowohl durch eine Schubbewegung als auch durch eine Zugbewegung der Stange zu betätigen.

Es empfiehlt sich, eine Feder zur Vorspannung der Stange im Sinne der Verschiebung des Schlittens im Ausschaltsinn sowie einen Tasthebel vorzusehen, durch den die Stange entgegen der Federkraft bewegbar ist. Der Tasthebel kann als Bestandteil des erwähnten Umlenkgetriebes so angebracht sein, daß er beim Einfahren des Schaltgerätes in die Schaltanlage bzw. den Einschubträger gegen ein ortsfestes Teil anschlägt und die hierdurch bewirkte Schwenkung die Stange unter gleichzeitiger Spannung der Feder verschiebt. Dadurch wird die auf das Auslöseorgan wirkende Auslösekraft aufgehoben, und das Schaltgerät kann in Betrieb genommen werden.

Die beschriebene Anordnung eignet sich gleichermaßen zur Betätigung der Auslösewelle eines Schaltschlosses des Schaltgerätes oder zur Betätigung der Auslösewelle einer Antriebsvorrichtung des Schaltgerätes. Auf diese Weise ist es möglich, beim Herausfahren des Schaltgerätes aus seinem Einschubträger eine Gefährdung des Benutzers dadurch weitestgehend zu vermeiden, daß sowohl die Schaltkontakte des Schaltgerätes geöffnet als auch der zur Betätigung der Schaltkontakte vorgesehene Federspeicher entspannt wird. Für beide Auslösevorgänge können gleiche Schlitten vorgesehen sein; darüber hinaus können zwei gelenkig miteinander verbundene Stangen vorgesehen sein, die gemeinsam mit der Rückstellkraft belastet sind.

Die beschriebene Anordnung läßt sich zwanglos in dem Mechanismus eines Schaltgerätes unterbringen, beispielsweise an einer Wand, in der eine Auslösewelle gelagert ist. Insbesondere kann zur Führung des Schlittens ein Träger vorgesehen sein, der zugleich das Widerlager einer an dem Schlitten angreifenden Rückstellfeder bildet und der wenigstens eine Durchgangsöffnung zur Befestigung an bzw. in dem Schaltgerät besitzt. Wählt man nämlich diese Ausgestaltung, so kann ein Schaltgerät im Bedarfsfall leicht mit der Anordnung ausgerüstet werden, weil der Träger mit dem Schlitten und möglicherweise auch den Stangen eine vormontierte Baugruppe bilden kann, die mit wenigen Handgriffen an einer dafür vorgesehenen Stelle des Schaltgerätes einsetzbar ist.

Die Erfindung wird im folgenden anhand der in den Figuren dargestellten Ausführungsbeispieles näher erläutert.

Hierbei betreffen die Figuren 1 bis 5 an einem Einschubrahmen angeordnete Teile, während die Figuren 6 bis 15 an einem Schaltgerät angeordnete und mit Teilen gemäß den Figuren 1 bis 5 zusammenwirkende Teile zeigt.

Die Figur 1 zeigt in einer schematischen, perspektivischen Darstellung einen Einschubrahmen mit einem Verstellantrieb und einem aus dem Einschubrahmen ausgefahren gezeigten Schaltgerät.

Die Figuren 2 und 3 zeigen in einer Draufsicht auf die Bodenplatte des Einschubrahmens gemäß der Figur 1 Teile eines Verstellantriebes sowie Einrichtungen zur Verriegelung des Schaltgerätes in unterschiedlichen Stellungen und zur zwangsläufigen Auslösung bei Verfahren des Schaltgerätes.

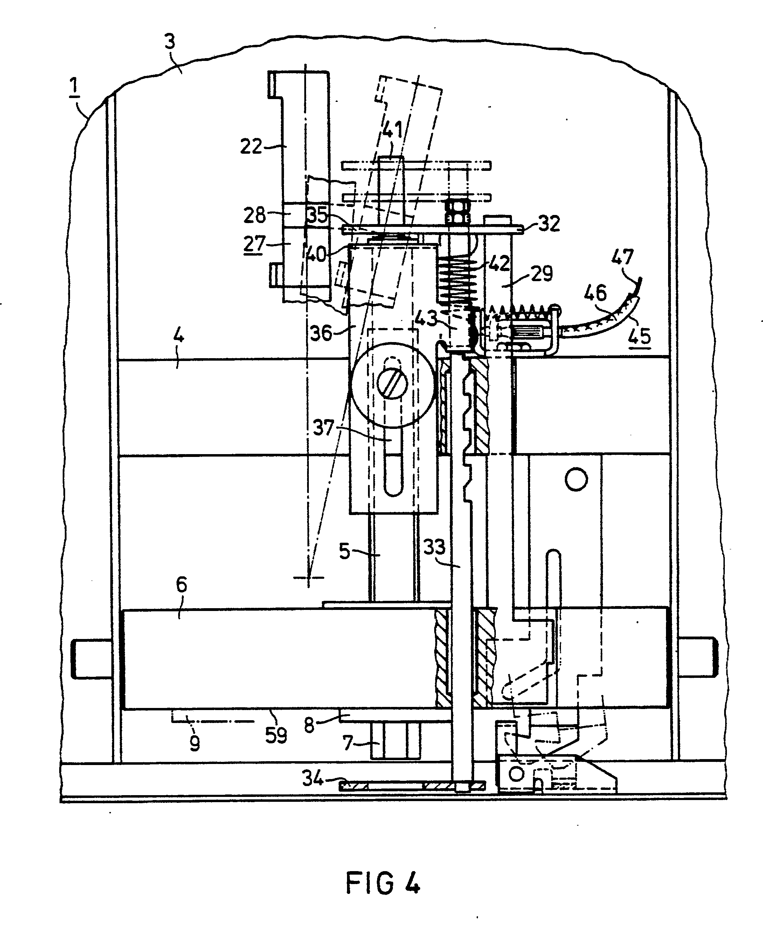

Zur Erläuterung der Nachführung eines Auslöseschiebers dient die Figur 4, die eine Draufsicht auf Teile des Verstellantriebes zeigt.

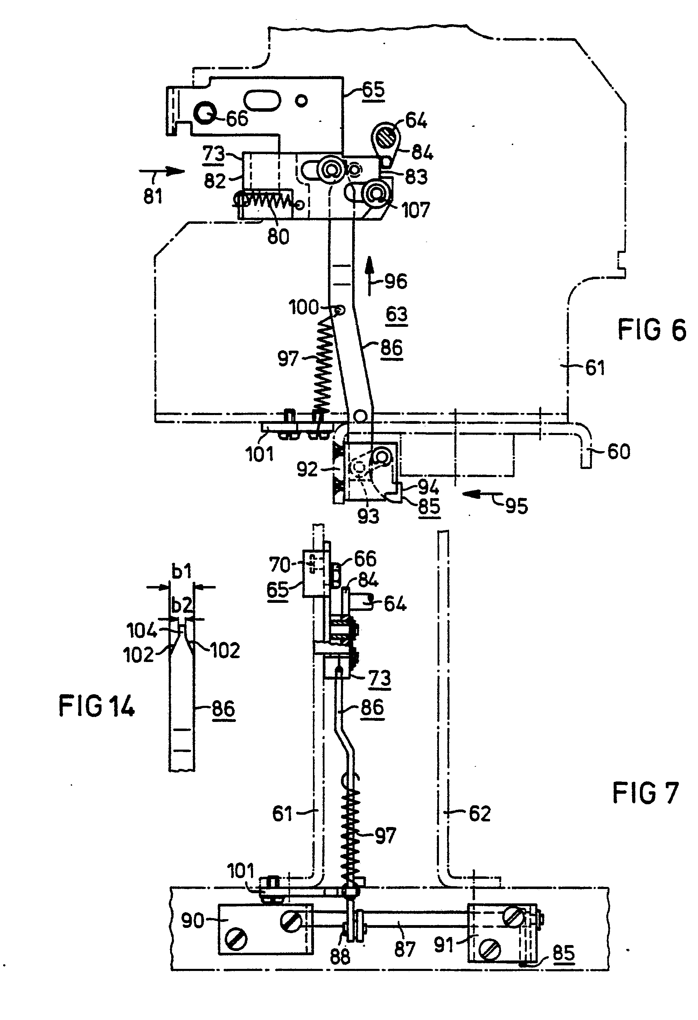

Die Figur 5 zeigt in einer perspektivischen Darstellung eine Anordnung zur Umkehr der Bewegungsrichtung eines Auslösegliedes.

Die Figuren 6 und 7 zeigen eine Anordnung zur Auslösung des Schaltschlosses eines Niederspannungs-Leistungsschalters in zwei rechtwinklig zueinander stehenden Ansichten.

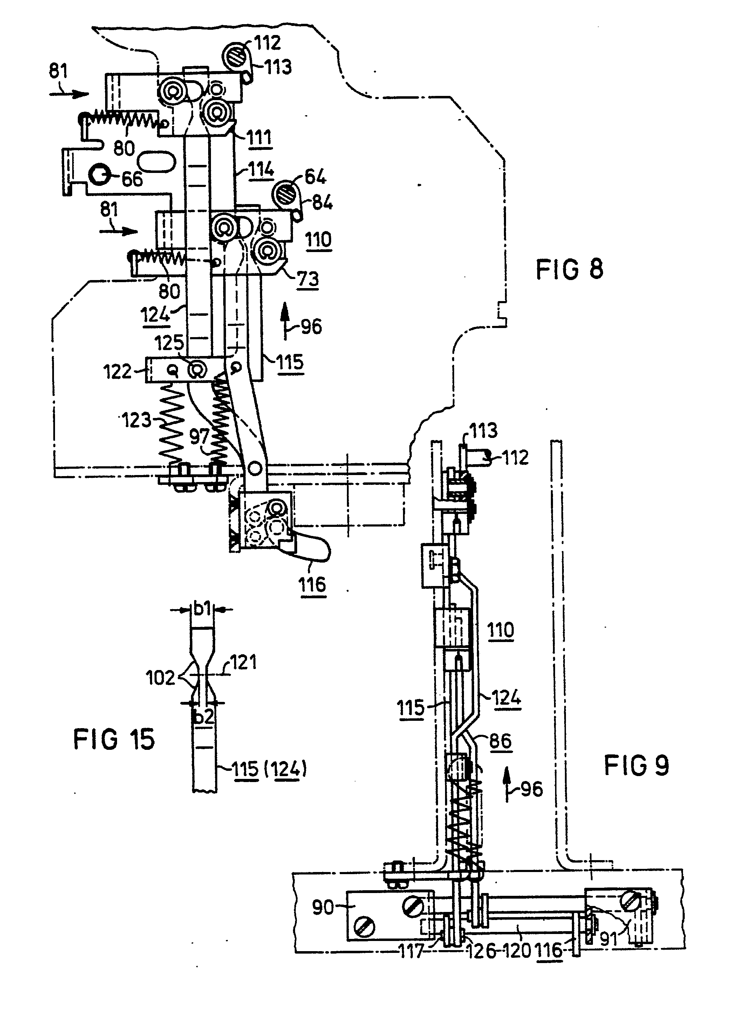

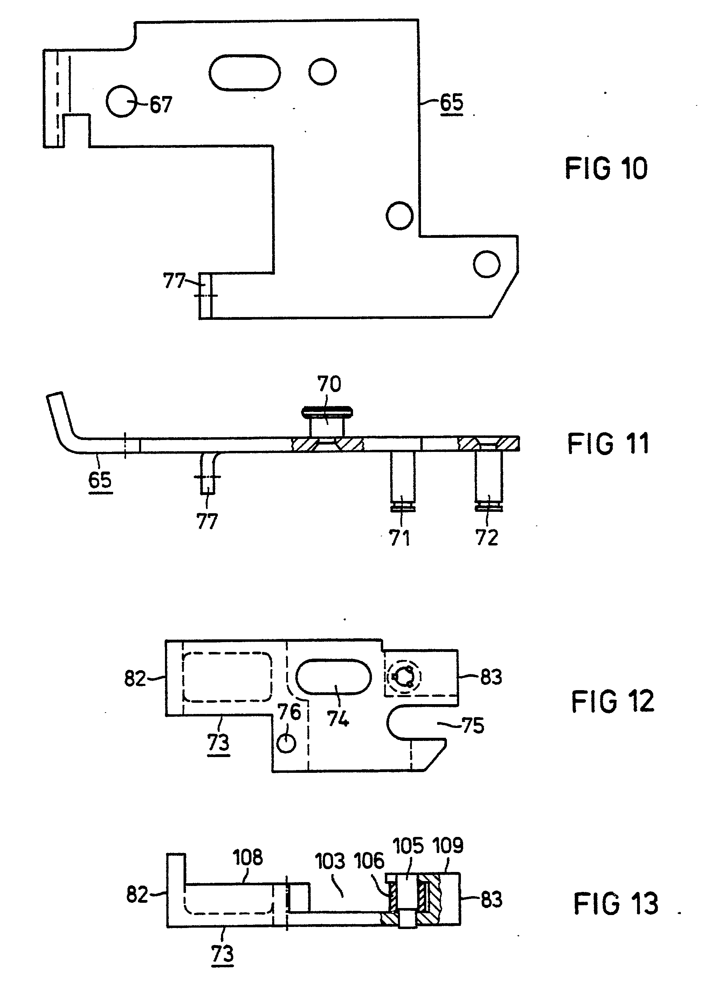

Die Figuren 8 und 9 zeigen in einer den Figuren 6 und 7 entsprechenden Darstellung eine Anordnung, die zusätzlich auch eine Auslösung des Einschalt-Energiespeichers eines Niederspannungs-Leistungsschalters gestattet.

Die Figuren 10 und 11 zeigen in zwei rechtwinklig zueinander stehenden, teilweise geschnittenen Ansichten in einer gegenüber den Figuren 6 und 7 vergrößerten Darstellung einen Träger für einen verschiebbar geführten Schlitten.

Gleichfalls in einer gegenüber den Figuren 6 und 7 vergrößerten Darstellung ist ein Schlitten in den Figuren 12 und 13 in zwei rechtwinklig zueinander stehenden Ansichten gezeigt.

Die Figuren 14 und 15 zeigen Bereiche veränderlicher Breite an unterschiedlich ausgebildeten Stangen.

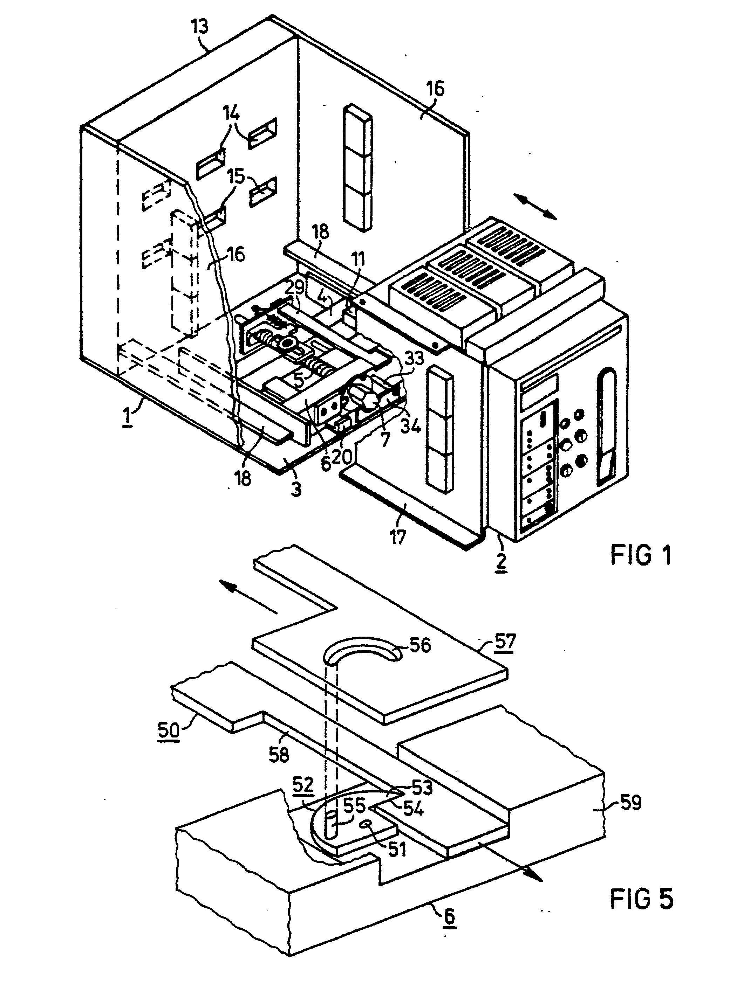

Der in der Figur 1 gezeigte Einschubrahmen 1 ist zum Einbau in eine Schaltanlage vorgesehen und dient zur Aufnahme eines Schaltgerätes oder einer Schaltgerätekombination. In der Figur 1 ist als Beispiel eines Schaltgerätes ein Niederspannungs-Leistungsschalter 2 gezeigt. Dieser ist in den Einschubrahmen 1 einsetzbar und gelangt dabei in Eingriff mit einem Verstellantrieb, dessen wesentliche Bestandteile eine Gewindespindel 5, eine ortsfeste, als Mutterstück für die Gewindespindel ausgebildete Traverse 4 sowie eine als Widerlager der Gewindespindel 5 dienende durch Drehung der Gewindespindel verschiebbare Traverse 6 umfaßt. Diese Teile sind auf einer Bodenplatte 3 des Einschubrahmens 1 angeordnet. Als Beispiel für Führungsteile sind in der Figur 1 Tragschienen 18 gezeigt, die an Seitenwänden 16 des Einschubrahmens 1 angebracht sind. Auf diesen Tragschienen gleitet der Leistungsschalter 2 mit Fußleisten 17. Der Leistungsschalter 2 ist dreipolig ausgebildet und besitzt rückwärtig angeordnete Anschlußleiter, von denen ein oberer Anschlußleiter 11 sichtbar ist. Die Anschlußleiter sind zum Eingreifen in eine rückseitige Trennkontaktanordnung 13 des Einschubrahmens 1 vorgesehen, die zum Schutz gegen eine Berührung spannungführender Teile mit einer Schutzplatte und darin angeordneten Durchtrittsöffnungen 14 und 15 vorgesehen sind. Die oberen Durchtrittsöffnungen 14 sind den Anschlußleitern 11 zugeordnet, während die unteren Durchtrittsöffnungen 15 für die in der Figur 1 nicht sichtbaren unteren Anschlußleiter des Leistungsschalters 12 vorgesehen sind.

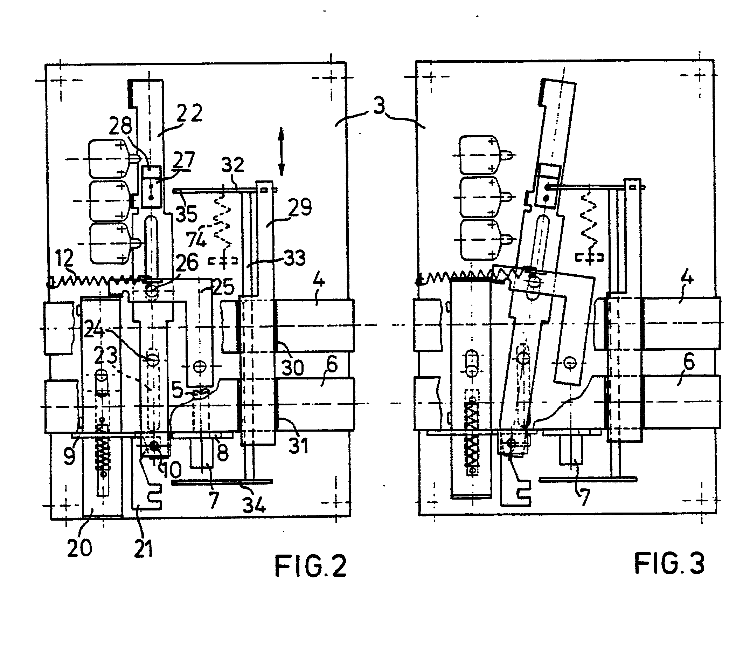

Der Verstellantrieb für den Leistungsschalter 2 ist mit einer Einrichtung zur Verriegelung in einer Betriebsstellung, einer Teststellung und einer Trennstellung versehen. Einzelheiten dieser Einrichtung sind den Figuren 2 und 3 zu entnehmen. In der Grundstellung des Verstellantriebes greift ein Riegel 9 ist eine Ausnehmung einer Nutenscheibe 8 ein, die an dem Kopfstück 7 der Gewindespindel angebracht ist. Die Gewindespindel 5 ist hierdurch gegen eine Drehung gesperrt. Soll die Drehung freigegeben werden, so ist zunächst ein Entsperrungsschieber 20 zu betätigen, der auf der Bodenplatte 3 geführt ist. In der Grundstellung liegt an einer rückwärtigen Arbeitsfläche des Entsperrungsschiebers 20 ein Hilfshebel 25 an, der an der Bodenplatte 3 schwenkbar gehalten ist und mit einem Lagerstift 26 in ein Langloch eines Steuerhebels 22 eingreift. Der Steuerhebel 22 ist seinerseits mittels eines Lagerbolzens 24 in einem Langloch 23 der Bodenplatte 3 geführt und kann somit sowohl in der Fahrrichtung des Schaltgerätes verschoben als auch relativ dazu geschwenkt werden. Zu einer solchen Schwenkung kommt es, wenn der Entsperrungsschieber 20 betätigt wird (Figur 3) und hierdurch der Hilfshebel 25 von der hinteren Arbeitsfläche des Entsperrungsschiebers 20 abgleitet und sich seitlich gegen den Entsperrungsschieber legt. Diese Stellung bleibt unter dem Einfluß einer an dem Hilfshebel angreifenden Rückstellfeder 12 zunächst aufrechterhalten. Die Schwenkung des Steuerhebels 22 wird durch eine gelenkige Verbindung mittels eines an dem Riegel 9 angebrachten Führungsstiftes 10 in eine Verschiebung des Riegels umgesetzt, dessen Nase hierdurch aus der Nut der Nutenscheibe 8 ausgehoben wird. Die Gewindespindel 5 kann nun durch Aufsetzen eines geeigneten Werkzeuges auf das Kopfstück 7 gedreht werden.

Die weiteren Vorgänge werden durch eine Kulisse 21 gesteuert, die sich in der Bodenplatte 3 befindet. Die Kulisse besitzt drei Ausnehmungen, deren Abstände dem zwischen der Betriebsstellung und der Teststellung sowie zwischen der Teststellung und der Trennstellung zurückzulegenden Fahrweg des Leistungsschalters 2 entspricht. Zwischen den Ausnehmungen befinden sich Steuerkurven, die durch den Führungsstift des Riegels 9 abgetastet werden. Auf diese Weise wird die Auslenkung des Steuerhebels 22 gegenüber der geschwenkten Stellung (Figur 3) jeweils soweit vergrößert, daß durch Mitnahme des Hilfshebels 25 über den Lagerstift 26 die gegenseitige Sperrung zwischen dem Hilfshebel und dem Entsperrungsschieber 20 aufgehoben wird uns dieser in seine Ausgangsstellung (Figur 2) zurückkehren kann. Hierdurch kann der Steuerhebel 22 ebenfalls in seine Ausgangsstellung (Figur 2) zurückkehren, wenn infolge der Verschiebung der Traverse 6 mittels der Gewindespindel 5 der Führungsstift 10 des Riegels 9 in die nächste Ausnehmung der Kulisse 21 gelangt. Durch das Eingreifen des Riegels 9 in die Nutenscheibe 8 wird dann wiederum die Drehung der Gewindespindel 5 gesperrt.

Der Steuerhebel 22 besitzt eine rückseitige Verlängerung mit Anschlagflächen für schematisch angedeutete Hilfsschalter, die den genannten drei Stellungen des Verstellantriebes und damit des Leistungsschalters 2 zugeordnet sind. An dieser rückwärtigen Verlängerung ist ferner eine Blattfeder 27 mit einer abgewinkelten Zunge 28 angebracht, deren Bedeutung noch erläutert wird.

Der Leistungsschalter 2 enthält in bekannter Weise Kontaktglieder für jeden Pol, die im folgenden gemeinsam als Kontaktapparat bezeichnet werden. Zur Betätigung des Kontaktapparates ist ferner ein Energiespeicher, beispielsweise in der Form von Federn vorgesehen. Durch Spannen des Energiespeichers wird der Leistungsschalter einschaltbereit gemacht. Durch ein Verklinkungsorgan kann die gespannte Stellung des Energiespeichers solange aufrechterhalten bleiben, bis durch Fernsteuerung oder von Hand die Freigabe erfolgt. Der Kontaktapparat wird dann über eine als Schaltschloß bezeichnete Antriebsvorrichtung betätigt und durch ein Verklinkungsorgan im eingeschalteten Zustand gehalten. Die zum Ausschalten benötigte Energie ist in dem Kontaktapparat selbst gespeichert. Wird daher das Verklinkungsorgan des Schaltschlosses freigegeben, so erfolgt unmittelbar die Trennung der Kontaktglieder des Kontaktapparates. Da diese Arbeitsweise von Leistungsschaltern, insbesondere von Niederspannungs-Leistungsschaltern, allgemein üblich ist, wird von einer näheren Darstellung abgesehen; Einzelheiten sind beispielsweise der US-A-3 301 984 zu entnehmen.

Um sicherzustellen, daß der Leistungsschalter 2 ausgeschaltet ist, wenn seine Stellung innerhalb des Einschubrahmens 1 verändert wird, ist in dem Einschubrahmen 1 ein Auslöseschieber 29 als Auslöseglied für den Leistungsschalter vorgesehen. Der Auslöseschieber 29 ist in einer Nut 30 der Traverse 4 sowie in einer weiteren Nut 31 der Traverse 6 geführt. An seinem inneren Ende ist der Auslöseschieber 29 durch ein Querstück 32 mit einer Führungsstange 33 verbunden, die gleichfalls in den Traversen 4 und 6 verschiebbar geführt ist. Wie insbesondere die Figur 4 zeigt, liegen der Auslöseschieber 29 und die Führungsstange 33 parallel zu der Gewindespindel 5. Am vorderen Ende trägt die Führungsstange 33 einen Mitnehmer 34, der eine dem Profil des Kopfstückes 7 der Gewindespindel 5 mit angemessenen Spiel angepaßte Ausnehmung besitzt. In seiner Grundstellung steht der Mitnehmer 34 vor dem Ende des Kopfstückes 7. Soll die Gewindespindel betätigt werden, so trifft das zur Drehung vorgesehene Werkzeug zwangsläufig zunächst auf den Mitnehmer 34, der infolgedessen verschoben werden muß, ehe das Werkzeug in Eingriff mit dem Kopfstück 7 gelangen kann. Hierdurch werden die Führungsstange 33 und der Schieber 29 in Richtung des Inneren des Einschubrahmens 1 verschoben. Da eine Drehung der Gewindespindel nur möglich ist, wenn zuvor der Entsperrungsschieber 20 betätigt worden ist, nimmt der Steuerhebel die in der Figur 3 gezeigte geschwenkte Stellung ein, in der sich die Blattfeder 27 mit ihrer Zunge 28 in der Bewegungsbahn einer durch das Querstück am Ende der Führungsstange 34 gebildeten Nase 35 befindet. Bei der Verschiebung der Führungsstange 33 wird somit die Nase 35 über die Zunge 28 der Blattfeder 27 gedrückt, und die Führungsstange 33 sowie der Schieber 29 werden in dieser Stellung solange festgehalten, wie der Steuerhebel 22 die dargestellte Stellung einnimmt.

Die Traverse 6 des Verstellantriebes verändert ihre Stellung relativ zu der Traverse 4, wenn das Schaltgerät mittels der Gewindespindel 5 verfahren wird. Dabei werden jedoch die Führungsstange 35 und der Auslöseschieber 29 durch eine aus der Figur 4 ersichtliche Anordnung nachgeführt. Diese weist einen Nachführschieber 36 auf, der mittels eines Langloches 37 an der Oberseite der Traverse 4 in der Längsrichtung der Gewindespindel 5 verschiebbar geführt ist. An seinem hinteren Ende besitzt der Nachführschieber 36 eine Abwinklung 40, die mit einer Öffnung über ein gewindefreies Endstück 41 der Gewindespindel 5 greift. Durch einen das Endstück 41 durchsetzenden Splint, einen Stellring oder ähnliche Mittel ist dafür gesorgt, daß sich die Gewindespindel ungehindert drehen kann und dabei der Nachführschieber 36 in beiden Bewegungsrichtungen mitgenommen wird. Das Querstück 32 wird dabei durch eine Zugfeder 42 in Anlage an der Abwinklung 40 bzw. einem zwischen dem Querstück 32 und der Abwinklung 40 befindlichen Bauteil gehalten und dadurch gleichfalls mitgeführt. Die Zugfeder 42 ist hierzu zwischen einem seitlichen Fortsatz 43 des Nachführschiebers 36 und dem Querstück 32 angeordnet.

Wie die Figur 4 zeigt, steht die Abwinklung 40 des Nachführschiebers 36 parallel zu dem mit der Führungsstange 33 verbundenen Teil des Querstücks 32. Durch die Einleitung einer Kraft zwischen die Abwinklung und das Querstück ist es daher möglich, die Führungsstange 33 und damit den Auslöseschieber 29 auch ohne Beaufschlagung des Mitnehmers 34 im Sinne der Auslösung zu verschieben. Als Beispiel für eine solche Krafteinleitung zeigt die Figur 4 ein biegsames Übertragungsorgan 45, bei dem es sich um einen Drahtauslöser handeln kann. Der in bekannter Weise mit einem Gewindestück versehene Mantel 46 des Übertragungsorgans 43 ist in eine entsprechende Öffnung des Querstückes 32 eingeschraubt, während die Seele 47 mit einem Stößel an der Abwinklung des

Nachführschiebers 36 anliegt. Durch die Betätigung des Übertragungsorgans 45 läßt sich somit das Schaltschloß des Schaltgerätes ebenfalls auslösen. Durch diese Weiterbildung der Erfindung ist es mit erkennbar geringem Aufwand möglich, eine zwangsläufig wirkende Abhängigkeit von einer oder mehreren Bedingungen in einer Schaltanlage herbeizuführen. Zu diesem Zweck können dementsprechend auch zwei oder mehrere Übertragungsorgane 45 in hierfür vorgesehene Öffnungen des Querstückes 32 eingesetzt sein. Als Beispiel für eine erwünschte Abhängigkeit sei der Fall genannt, daß nur einer von zwei an einer gemeinsamen Sammelschiene liegenden Leistungsschaltern eingeschaltet werden kann.

Eine Betätigung eines Auslöseorgans des Schaltgerätes kann durch den Auslöseschieber 29 erfolgen. Günstiger ist die Anwendung eines Hilfsauslöseschiebers 50 gemäß der Figur 5, weil diese eine nach vorn gerichtete Bewegung ausführt, die sich besonders einfach auf das Schaltgerät übertragen läßt. Wie man erkennt, ist in einer Ausnehmung an der Oberseite der bewegbaren Traverse 6 mittels eines Drehzapfens 51 ein Druckstück 52 schwenkbar gelagert. Eine Nase 53 des Druckstückes 52 wirkt mit einer Arbeitsfläche 54 des Hilfsauslöseschiebers 50 zusammen, der gleichfalls in der Ausnehmung der Traverse 6 verschiebbar geführt ist. Ein Mitnehmerzapfen 55 des Druckstückes 52 ist zum Eingreifen in einen etwa viertelkreisförmigen Steuerschlitz 56 eines Auslöseschiebers 57 vorgesehen, der nach Lage und Betätigung dem Auslöseschieber 29 in der Figur 4 entspricht. In der Figur 5 sind die Teile lediglich zum besseren Verständnis auseinandergezogen dargestellt. Im montierten Zustand liegt der Auslöseschieber 57 direkt über dem Hilfsauslöseschieber 50, wobei die Tiefe der Ausnehmung der bewegbaren Traverse 6 wenigstens der Materialstärke beider Schieber entspricht.

Wird der Auslöseschieber 57 im Sinne des in der Figur 5 eingetragenen Pfeiles verschoben, so wird das Druckstück 52 über den Mitnehmerzapfen 55 um seinen Drehzapfen 51 derart geschwenkt, daß die Nase 53 die Arbeitsfläche 54 des Hilfsauslöseschiebers 50 beaufschlagt und diesen in Pfeilrichtung, d. h. nach vorn verschoben. Durch eine geeignete Bemessung einer Ausnehmung 58 des Hilfsauslöseschiebers 50, deren Vorderkante die Arbeitsfläche 54 bildet, ist für einen ausreichenden Bewegungsspielraum des Hilfsauslöseschiebers gesorgt. Die Bewegungscharakteristik ist durch die Form des Steuerschlitzes 56 zu beeinflussen; in dem dargestellten Beispiel hat der Steuerschlitz 56 eine etwa viertelkreisförmige Gestalt, wodurch zunächst eine geringe Verschiebung des Auslöseschiebers 57 in eine relativ große Verschiebung des Hilfsauslöseschiebers 50 umgesetzt wird. Im weiteren Verlauf der Verschiebung kehren sich die Verhältnisse in der Weise um, daß eine relativ große Verschiebung des Auslöseschiebers 57 eine relativ geringe Verschiebung des Hilfsauslöseschiebers 50 folgt. Damit wird erreicht, daß ein an dem zugehörigen Schaltgerät angebrachtes, mit dem Hilfsauslöseschieber 50 zusammenwirkendes Übertragungsorgan nahezu sprungartig beaufschlagt

und eine zuverlässige Auslösung herbeigeführt wird.

Im folgenden werten anhand der Figuren 6 bis 15 Ausführungsformen von Kupplungsgliedern erläutert, die zur Übertragung der Auslösebewegung des Auslöseschiebers 29 bzw. des Hilfsauslöseschiebers 50 auf den Leistungsschalter 2 dienen.

Ein in den Figuren 6 und 7 strichpunktiert angedeuteter Querträger 60 mit U-förmigem Querschnitt sowie rechtwinklig zu diesem stehende und mit ihm verbundene Wände 61 und 62 sind Bestandteil des Tragwerkes des in der Figur 1 gezeigten Niederspannungs-Leistungsschalters 2. Die Wände 61 und 62 können vorzugsweise Zwischenwände sein, in denen Antriebswellen sowie Auslösewellen des Schaltmechanismus gelagert sind. Die an dem Querträger 60 sowie den Wänden 61 und 62 angebrachte und als Ganzes mit 63 bezeichnete Anordnung dient zur Betätigung einer Auslösewelle 64 des Schaltschlosses des Leistungsschalters.

Alle übrigen Teile des Leistungsschalters sind nicht dargestellt, da sie für das Verständnis der Erfindung nicht erforderlich sind und die Anordnung 63 für Leistungsschalter unterschiedlicher Konstruktionen einsetzbar ist. Ein Beispiel für einen Niederspannungs-Leistungsschalter ist der US-A-33 01 984 zu entnehmen.

Die Anordnung 63 umfaßt einen Träger 65, der mittels einer Schraube 66 an der Wand 61 befestigt ist. Wie die Figuren 5 und 6 zeigen, weist der Träger 65 eine Durchgangsöffnung 67 zur Aufnahme der Befestigungsschraube 4 auf. Ferner ist der Träger 65 mit einem pilzkopfförmigen Bolzen 70 versehen, der zur erleichterten Befestigung des Trägers 65 an der Wand 61 in eine entsprechende Öffnung, beispielsweise eine Öffnung in der Form eines Schlüsselloches, einführbar ist. Auf der gegenüberliegenden Seite besitzt der Träger 65 zwei Führungsstifte 71 und 72, die zur Führung eines Schlittens 73 dienen, wie die Figur 1 erkennen läßt. Der Schlitten 73 ist hierzu mit einem Langloch 74 sowie einem weiteren, seitlich offenen Langloch 75 versehen. Zwischen einer Öffnung 76 des Schlittens 73 und einem abgewinkelten Schenkel 77 des Trägers 65 ist eine Schraubenzugfeder 80 ausgespannt, die eine Rückstellkraft auf den Schlitten 73 ausübt. Der Schlitten 73 läßt sich somit durch Beaufschlagung mit einer Betätigungskraft in der Richtung eines in der Figur 1 ersichtlichen Pfeiles 81 verschieben. Die Betätigungskraft kann hierzu in geeigneter Weise auf eine Arbeitsfläche 82 des Schlittens 73 einwirken, beispielsweise unmittelbar von Hand oder mittels eines von Hand zu betätigenden Druckknopfes, der an einer den bedienungsseitigen Abschluß des Leistungsschalters bildenden Frontplatte angebracht ist.

Mit einer der Arbeitsfläche 82 gegenüberliegenden weiteren Arbeitsfläche 83 liegt der Schlitten 73 an einem Kurbelarm 84 an, der auf der Auslösewelle 64 des Schaltschlosses des Leistungsschalters 2 sitzt. Somit ist das Schaltschloß durch Betätigung des Schlittens 73 in Richtung des Pfeiles 81 (Figur 6) jederzeit willkürlich auslösbar.

Um den Leistungsschalter auch zwangsläufig in Abhängigkeit von Betriebsparametern auslösen zu

können, ist an der Innenseite des Querträgers 60 ein Tasthebel 85 schwenkbar gelagert, der mittels einer Stange 86 den Schlitten 73 gleichfalls zu verschieben vermag. Hierzu ist der Tasthebel 85 auf einer Welle 87 befestigt, die an ihren Enden in Lagerböcken 90 und 91 drehbar gelagert ist. Diese Lagerböcke sind an dem frontseitigen Schenkel 92 des Querträgers 60 durch Schrauben befestigt. Wie insbesondere die Figur 6 zeigt, bildet der Tasthebel 85 zusammen mit einem auf der Welle 87 sitzenden Hebel 93 einen Winkelhebel in solcher Anordnung, daß eine Beaufschlagung einer Tastfläche 94 des Tasthebels 85 mit einer in Richtung eines in der Figur 6 gezeigten Pfeiles 95 wirkenden Kraft die Stange 86 in der Richtung eines Pfeiles 96, d. h. im wesentlichen rechtwinklig zu der Kraftrichtung (Pfeil 95), verschiebbar ist. Eine Schraubenzugfeder 97 ist in eine Öffnung 100 der Stange 86 eingehängt und greift mit ihrem gegenüberliegenden Ende an einem in der Ebene des Querträgers 1 liegenden Widerlager 101 an. Das dem Tasthebel 25 gegenüberliegende Ende der Stange 86 besitzt einen Bereich veränderlicher Breite, dessen Gestaltung insbesondere der Figur 14 zu entnehmen ist. Wie zu erkennen ist, nimmt in diesem Bereich die Breite der Stange 86 ausgehend von einem Maß b1 auf ein geringeres Maß b2 ab. Der Übergang erfolgt durch symmetrische Schrägflächen 102, die gerade oder gekrümmt ausgeführt sein können.

In der in der Figur 6 gezeigten Grundstellung ragt die Stange 86 mit ihrem oberen Endteil in eine Ausnehmung 103 des Schlittens 73 hinein. Dabei liegt die eine Seite des am oberen Ende der Stange 86 verbleibenden Zapfens 104 an dem Führungsstift 71 an, während die andere Seite des Zapfens 104 an einem Stift 105 des Schlittens 73 anliegt, der zur Verringerung der Reibung mit einer Rolle 106 versehen ist. In der Stellung der Teile gemäß den Figuren 6 unmd 7 ist die offene Seite der Ausnehmung 103 des Schlittens 73 dem Träger 65 zugewandt. Gegen eine Entfernung ist der Schlitten 73 durch Federringe 107 gesichert, die in eine Nut am Ende der Führungsstifte 71 und 72 eingelegt sind. Die an die offene Seite der Ausnehmung 103 angrenzenden Flächen 108 und 109 des Schlittens 73 sind gegeneinander um die Materialdicke des Trägers 65 versetzt, derart, daß die Fläche 108 auf dem Träger 65 aufliegt und die Fläche 109 seitlich von dem Träger 65 zur Auflage auf der Wand 61 gelangt. Eine an die Fläche 108 angrenzende Abwinklung, welche die Arbeitsfläche 82 aufweist, umgreift die Stirnflächen des Trägers 65 und der Wand 61. Hierdurch steht eine ausreichende Fläche für die Einleitung einer Kraft durch ein Handbetätigungsglied in solcher Stellung zur Verfügung, daß der Schlitten 73 verkantungsfrei verschoben werden kann.

Wird ausgehend von dieser Stellung die Stange 86 durch Betätigung des Tasthebels 85 in Richtung des Pfeiles 96 verschoben, so drängen sich die Schrägflächen 102 keilartig zwischen den Führungsstift 71 und die Rolle 106, wodurch der Schlitten 73 in Richtung des Pfeiles 81 soweit verschoben wird, wie es dem Unterschied der Maße b1 und b2 entspricht.

Durch eine gelenkige Verbindung der Stange 86 mit dem Hebel 93, durch einen Stift 88 ist dafür gesorgt, daß der Schlitten 73 ohne Behinderung durch die Stange 86 verschiebbar ist.

Wie insbesondere die Figuren 6 und 7 zeigen, kann die gesamte gezeigte Anordnung 63 wahlweise verwendet werden, wenn es erwünscht ist, daß die Auslösewelle 64 nicht nur von Hand, sondern zusätzlich auch selbsttätig beeinflußbar sein soll. In einer Grundausführung des Leistungsschalters 2 wird somit nur ein Handbetätigungsorgan benötigt, um den Kurbelarm 84 der Auslösewelle 64 zu beaufschlaggen. Zum Zweck der selbsttätigen Auslösung kann die beschriebene Anordnung mit wenigen Handgriffen in den Mechanismus des Leistungsschalters 2 eingefügt werden, indem der Träger 65 mit dem Schlitten 73 an der Wand 61 befestigt wird. Die Lagerböcke 90 und 91 können mit der Welle 87 und der Stange 86 eine weitere, gleichfalls einfach anzubringende Baugruppe bilden. Es ist ferner möglich, den Schlitten 73 ohne gesonderten Träger 65 unmittelbar an der Wand 61 anzubringen, indem die Führungsstifte 71 und 72 (Figur 11) statt auf dem Träger 65 auf der Wand 61 befestigt werden. Der Schlitten 73 gehört dann zur Grundausführung des Leistungsschalters mit dem Ergebnis, daß das Handbetätigungsorgan zur Drehung der Auslösewelle 64 für beide Ausführungen des Leistungsschalters einheitlich ist und daß nur die Stange 86 mit den zugehörigen Teilen im Bedarfsfall als Kupplungsglied nachzurüsten ist. Der Tasthebel 85 dient zur Beaufschlagung durch den Hilfsauslöseschieber 50 am Einschubrahmen 1. Bei jeder Verschiebung des Leistungsschalters 2 in seinem Einschubrahmen wird in der beschriebenen Weise der Hilfsauslöseschieber 50 gegen den Tasthebel 85 gedrückt und bis zur Beendigung des Verschiebevorganges in dieser Stellung gehalten. Es ist daher nicht möglich, den Leistungsschalter während der Verschiebung wieder einzuschalten.

In dem weiteren Ausführungsbeispiel gemäß den Figuren 8 und 9 ist eine erweiterte Anordnung 110 vorgesehen, die zusätzlich zu dem schon beschriebenen Schlitten 23 einen weiteren gleichen Schlitten 111 aufweist. Der weitere Schlitten 111 dient zur Betätigung einer Auslösewelle 112, die Bestandteil eines zum Einschalten des Leistungsschalters dienenden Speicherantriebes ist. Durch Betätigung sowohl der Auslösewelle 64 als auch der Auslösewelle 112 ist somit zu erreichen, daß alle Federspeicher des Leistungsschalters entspannt sind und das Bedienungspersonal bei der Handhabung des Leistungsschalters vor überraschenden und gefahrbringenden Bewegungsvorgängen geschützt ist.

Der weitere Schlitten 111 ist zusammen mit dem Schlitten 73 auf einem Träger 114 in der gleichen Weise geführt, wie dies anhand der Figuren 6 und 11 für den Schlitten 73 beschrieben worden ist. Hierzu ist der Träger 114 gegenüber dem in den Figuren 10 und 11 gezeigten Träger 65 vergrößert ausgeführt, läßt sich jedoch in sinngemäß der gleichen Weise mittels einer Schraube 66 an der Wand 61 des Leistungsschalters befestigen. Gleichfalls in Übereinstimmung mit den Figuren 6 und 7 ist die Stange 86 in der beschriebenen Weise zur Verschiebung des Schlittens 73 angeordnet. In die ausreichend breit bemessene Ausnehmung 103 (Figur 13) des Schlittens 73 greift jedoch in paralleler Stellung zu der Stange 86 eine weitere Stange 115 ein, die mittels eines weiteren Tasthebels 116, eines Hebels 117 und einer gleichfalls in den Lagerböcken 90 und 91 gelagerten Welle 120 in Richtung des Pfeiles 96 verschiebbar ist. Das mit dem Schlitten 73 zusammenwirkende Ende der Stange 115 ist als Einzelheit in der Figur 15 dargestellt. Wie man erkennt, ist der Bereich veränderlicher Breite am Ende der Stange 115 symmetrisch zu einer quer zur Längsachse der Stange 115 verlaufenden Mittellinie 121 ausgebildet. Demgemäß nimmt die Breite der Stange 115 ausgehend von dem Maß $b_1$ zunächst auf das Maß $b_2$ ab, um dann wieder auf das Maß $b_1$ anzusteigen, ungeachtet der Richtung der Betrachtung. Offensichtlich bietet diese Gestaltung der Stange 115 die Möglichkeit, eine Verschiebung des Schlittens 73 durch eine Verschiebung der Stange 115 sowohl in der Richtung des Pfeiles 96 als auch entgegen dieser Richtung zu bewirken. In dem Beispiel gemäß den Figuren 8 und 9 ist die Anordnung so getroffen, daß durch Beaufschlagung der Stange 115 mittels einer Schraubenzugfeder 123 der Schlitten 73 im Ruhezustand im Sinne der Verdrehung der Auslösewelle 64 verschoben ist. Erst durch Betätigung des weiteren Tasthebels 116 wird die Stange 115 angehoben und gelangt dann mit ihrem schmalen Teil zwischen den Führungsstift 71 und die Rolle 106, so daß nun der Schlitten 73 unter dem Einfluß der Schraubenzugfeder 80 in die in der Figur 6 gezeigte Stellung gelangt.

Durch einen einseitigen Angriff der Schraubenzugfeder 87 an der Stange 86 ist dafür gesorgt, daß die Stange 86 stets ohne störendes Spiel mit ihrer einen Schrägfläche 102 an dem Führungsstift 71 anliegt.

Zur Betätigung des weiteren Schlittens 111 ist als Kupplungsglied eine weitere Stange 124 vorgesehen, die an ihrem oberen Ende ebenso ausgebildet ist, wie dies für die Stange 115 in der Figur 15 dargestellt ist. Die Stangen 115 und 124 sind mittels eines Gelenkbolzens 125 miteinander gelenkig verbunden. Hierzu ist die Stange 115 winkelförmig gestaltet, wobei der Gelenkbolzen 125 den abgewinkelten Schenkel 126 in der Stange 115 durchsetzt. An diesem Schenkel 126 greift auch die Schraubenzugfeder 123 an, die somit beide Stangen im Sinne der Verschiebung der Schlitten 73 und 111 in der Richtung des Pfeiles 81 vorspannt. Die Auslösewellen 64 und 112 werden hierdurch im Auslösesinn verdreht. Der Zweck dieser Anordnung besteht darin, den Leistungsschalter, dessen Bestandteil die Anordnung 110 ist, in einen vollkommen entspannten Zustand zu versetzen, wenn der Leistungsschalter aus dem Schaltschrank bzw. seinem Einschubrahmen 1 herausgenommen wird. Hierzu ist der Tasthebel 116 so angeordnet, daß er beim Einfahren des Leistungsschalters mit einem ortsfesten Gegenstück in Berührung tritt und hierdurch die Stangen 115 und 124 bei gleichzeitiger Spannung der Schraubenfeder 123 in Richtung des Pfeiles 96 verschoben werden. Als Gegenstück eignet sich insbesondere die bewegbare Traverse 6 des Einschubrahmens 1, vgl. die Figuren 1 und 4. Die Schlitten 73 und 111 gelangen infolgedessen in ihre entgegen der Richtung des Pfeiles 81 verschobene Stellung, wodurch die Auslösewellen 64 und 112 in ihre Ruhelage zurückkehren. Ausgehend hiervon können der Einschaltspeicher des Leistungsschalters gespannt und die Schaltkontakte geschlossen werden.

Wie dies schon bezüglich des Schlittens 73 und der Stange 86 erwähnt wurde, ist auch die Verschiebbarkeit des Schlittens 111 durch die Stange 114 nicht behindert, weil diese mit dem auf der Welle 120 sitzenden Hebel 117 durch einen Gelenkbolzen 126 verbunden ist.

**Patentansprüche**

1. Elektrische Schalteinrichtung mit einem Einschubrahmen (1) und einem in den Einschubrahmen einsetzbaren Schaltgerät (2) mit folgenden Merkmalen:
   - das Schaltgerät (2) weist eine zur Betätigung seines Kontaktapparates dienende verklinkbare Antriebsvorrichtung auf;
   - der Einschubrahmen (1) ist mit einem mit dem Schaltgerät (2) kuppelbaren, zum Verfahren des Schaltgerätes (2) eine Gewindespindel (5) aufweisenden Verstellantrieb (4, 5, 6) ausgerüstet;
   **gekennzeichnet durch** folgende Merkmale:
   - an dem Einschubrahmen (1) ist ein durch das zur Bedienung der Gewindespindel (5) vorgesehene Werkzeug betätigbares Auslöseglied (29) angeordnet;
   - an dem Schaltgerät (2) ist ein mit einem Auslöseorgan der Verklinkungseinrichtung der Antriebsvorrichtung einerseits und mit dem Auslöseglied andererseits zusammenwirkendes Kupplungsglied (86, 115) angeordnet.

2. Schalteinrichtung nach Anspruch 1, **dadurch gekennzeichnet,** daß dem Auslöseglied (29) eine durch den Verstellantrieb (4, 5, 6) zur Rückstellung freigebbare Verklinkungseinrichtung (22; 27) zugeordnet ist.

3. Schalteinrichtung nach Anspruch 2, **dadurch gekennzeichnet,** daß die Verklinkungseinrichtung des am Einschubrahmen (1) befindlichen Auslösegliedes (29) ein durch einen zur Freigabe des Verstellantriebes (4, 5, 6) dienenden Entsperrungsschieber (20) in die Bewegungsbahn des Auslösegliedes (29) schwenkbares Sperrglied (27) aufweist.

4. Schalteinrichtung nach Anspruch 3, **dadurch gekennzeichnet,** daß das Sperrglied als Blattfeder (27) mit einer schräg zu der Verschiebungsrichtung des Auslösegliedes (29) stehenden Zunge (28) ausgebildet ist und das Auslöseglied (29) mit einer über die Zunge (28) drückbaren Nase (35) verbunden ist.

5. Schalteinrichtung nach den Ansprüchen 3 und 4, **gekennzeichnet durch** folgende Merkmale:
   - die Blattfeder (27) ist an einem Steuerhebel (22) angebracht, der mittels eines Lagerbolzens (24) in einem Langloch (23) der Bodenplatte (3) des Einschubrahmens (1) in der Fahrrichtung des Schaltgerätes (2) verschiebbar und relativ dazu schwenkbar geführt ist;
   - der Steuerhebel (22) ist gelenkig mit einem Riegel (9) verbunden, der quer zur Fahrrichtung des Schaltgerätes (2) an einer als Widerlager für die Gewindespindel (5) dienenden Traverse (6) angebracht ist;

- der Riegel (9) besitzt einen Führungsstift (10) zum Eingreifen in eine in der Bodenplatte (3) befindlichen Kulisse (21);

- der Steuerhebel (22) ist gelenkig mit einem Hilfshebel (25) verbunden, der eine mit dem Entsperrungsschieber (20) im Sinne einer gegenseitigen Sperrung im betätigten Zustand zusammenwirkende Arbeitsfläche aufweist; und

- die Kulisse (21) besitzt Ausnehmungen für unterschiedliche Positionen des Schaltgerätes (2) in dem Einschubrahmen (1) und Steuerkurven zur selbsttätigen Rückstellung des Steuerhebels (22) und des Entsperrungsschiebers (20) beim Verfahren des Schaltgerätes (2).

6. Schalteinrichtung nach Anspruch 1, **dadurch gekennzeichnet,** daß zur Betätigung des Auslösegliedes (29) ein dem Profil des bedienungsseitigen Kopfstückes (7) der Gewindespindel (5) angepaßter, durch das Werkzeug zwangsläufig zu beaufschlagender Mitnehmer (34) vorgesehen ist.

7. Schalteinrichtung nach Anspruch 1, **dadurch gekennzeichnet,** daß das Auslöseglied als parallel zu der Gewindespindel (5) angeordneter Schieber (29) ausgebildet und durch eine Führungsstange (33) bewegbar ist, die in einer als Mutterstück der Gewindespindel (5) dienenden ortsfesten Traverse (4) und einer ein Widerlager der Gewindespindel (5) bildenden bewegbaren Traverse (4) geradlinig verschiebbar geführt ist.

8. Schalteinrichtung nach Anspruch 7, **dadurch gekennzeichnet,** daß das Auslöseglied (57) des Einschubrahmens (1) eine Steuerkurve (56) aufweist, in die ein Zapfen (55) eines an der bewegbaren Traverse (4) schwenkbar gelagerten Druckstückes (52) eingreift und daß eine Nase (53) des Druckstückes (52) einer Arbeitsfläche (54) eines parallel zu dem Auslöseglied (57) angeordneten und verschiebbar geführten Hilfsauslösegliedes (50) derart gegenüberstehend angeordnet ist, daß eine Verschiebung des Auslösegliedes (57) in eine gegenläufige Bewegung des Hilfsauslösegliedes (50) umgeformt wird.

9. Schalteinrichtung nach Anspruch 8, **dadurch gekennzeichnet,** daß die Steuerkurve als etwa viertelkreisförmiger Schlitz (56) ausgebildet ist.

10. Schalteinrichtung nach Anspruch 7, **dadurch gekennzeichnet,** daß an der als Mutterstück dienenden Traverse (4) ein Nachführschieber (36) angeordnet ist, der mit einer Abwinklung (40) die Gewindespindel (5) übergreift und der einen Fortsatz (43) als Widerlager einer Feder (42) aufweist, deren anderes Ende zur Vorspannung des Auslöseschiebers (29) in seine Ruhestellung auf die Führungsstange (33) wirkt.

11. Schalteinrichtung nach Anspruch 10, **dadurch gekennzeichnet,** daß die Gewindespindel (5) ein von Gewinde freies Endstück (41) und die Abwinklung (40) des Nachführschiebers (36) eine Öffnung zum Durchtritt des Endstückes (41) besitzt.

12. Schalteinrichtung nach Anspruch 4 und 10, **dadurch gekennzeichnet,** daß die Nase (35) Bestandteil eines an der Führungsstange (33) angebrachten Querstückes (32) ist, das wenigstens teilweise parallel zu der Abwinklung (40) des Nachführschiebers (36) verlaufend angeordnet ist und daß das Querstück (32) wenigstens eine Öffnung als Widerlager des Mantels (46) eines biegsamen Übertragungsorgans (45) besitzt, durch dessen Seele (47) die Abwinklung (40) des Nachführschiebers (36) mit einer Kraft beaufschlagbar ist, die den Auslöseschieber (29) im Sinne der Auslösung des Schaltgerätes (2) zu verschieben bestrebt ist.

13. Schalteinrichtung nach Anspruch 1, **dadurch gekennzeichnet,** daß das Schaltgerät (2) zusätzlich ein mit einem Verklinkungsorgan (112) eines Energiespeichers zusammenwirkendes Kupplungsglied (115) aufweist, das mittels eines Tastgliedes (116) und einer an dem Verstellantrieb (4, 5, 6) befindlichen Tastfläche (94) bei mit dem Verstellantrieb (4, 5, 6) gekuppeltem Schaltgerät (2) in einer unwirksamen Stellung gehalten wird.

14. Schalteinrichtung nach Anspruch 1, **dadurch gekennzeichnet,** daß das Kupplungsglied als längs verschiebbare Stange (86; 115) ausgebildet ist, die durch ein am Sockel (Querträger 60) des Schaltgerätes (2) angeordnetes und mit dem Auslöseglied (29; 50) zusammanwirkendes Umlenkgetriebe (Tasthebel (85, 116); Hebel (93, 117); Welle (87, 120) antreibbar ist und die mit einem Bereich veränderlicher Breite (b1, b2) zwischen einem ortsfesten Führungsstift (71) eines in Richtung auf das Auslöseorgan (64) des Schaltgerätes (2) bewegbaren und wahlweise von Hand betätigbaren Schlittens (73) und einem an dem Schlitten (73) angeordneten Stift (105) eingreift.

15. Schalteinrichtung nach Anspruch 14, **dadurch gekennzeichnet,** daß der Bereich veränderlicher Bereite der Stange (115) spiegelbildlich zu einer quer zur Längserstreckung der Stange (115) verlaufenden Mittellinie (121) ausgebildet.

16. Schalteinrichtung nach Anspruch 14, **dadurch gekennzeichnet,** daß die Stange (115; 124) durch eine Feder (123) in Sinne einer Verschiebung des Schlittens (73; 111) im Ausschaltsinn des Schaltgerätes vorgespannt ist und durch einen mit einem ortsfesten Teil (Traverse 6) zusammenwirkenden weitere Tasthebel (116) entgegen der Kraft der Feder (123) bewegbar ist.

17. Schalteinrichtung nach Anspruch 14, **dadurch gekennzeichnet,** daß zur gleichzeitigen Betätigung von zwei Auslöseorganen (64; 112) des Schaltgerätes (2) zwei Schlitten (73; 111) und zwei gelenkig miteinander verbundene Stangen (115; 124) vorgesehen sind, die gemeinsam mit der Rückstellkraft (Feder 123) belastet sind.

18. Schalteinrichtung nach Anspruch 14, **durch gekennzeichnet,** daß der Schlitten (73; 111) an einem Träger (65; 114) geführt ist, der zugleich das Widerlager einer an den Schlitten (73; 111) angreifenden Rückstellfeder (80; 122) bildet und der wenigstens eine Durchgangsöffnung (67) zur Befestigung an bzw. in dem Schaltgerät (Wand (61) besitzt.

**Claims**

1. Electrical switching apparatus with a withdrawable frame (1) and a switching device (2) which can be inserted in the withdrawable frame, having the following features:

- the switching device (2) has a lockable drive device serving to actuate its contact system;
- the withdrawable frame (1) is equipped with a positioning drive (4, 5, 6) which can be coupled to the switching device (2) and which has a screw spindle (5) for moving the switching device (2);

characterised by the following features:

- arranged on the withdrawable frame (1) is a releasing element (29) which can be actuated by the tool provided for operating the screw spindle (5);
- arranged on the switching device (2) is a coupling element (86, 115) which co-operates on the one hand with a releasing part of the locking apparatus of the drive device, and on the other hand with the releasing element.

2. Switching apparatus according to claim 1, characterised in that, assigned to the releasing element (29), there is a locking apparatus (22; 27) which can be released by the positioning drive (4, 5, 6) for the resetting.

3. Switching apparatus according to claim 2, characterised in that the locking apparatus of the releasing element (29) located on the withdrawable frame (1) has a blocking element (27) which can be swivelled into the path of movement of the releasing element (29) by means of an unlatching slider (20) serving to release the positioning drive (4, 5, 6).

4. Switching apparatus according to claim 3, characterised in that the blocking element is constructed as a leaf spring (27) with a tongue (28) which is inclined to the direction of displacement of the releasing element (29), and the releasing element (29) is connected to a lug (35) which can be pressed by way of the tongue (28).

5. Switching apparatus according to claims 3 and 4, characterised by the following features:

- the leaf spring (27) is attached to a control lever (22) which is guided by means of a bearing bolt (24) in an elongated hole (23) in the base plate (3) of the withdrawable frame (1) so that it can be displaced in the direction of travel of the switching device (2) and can be swivelled in relation to the said switching device;
- the control lever (22) is pivotally connected to a bolt (9) which is attached, crosswise to the direction of travel of the switching device (2), to a cross-member (69) serving as a support for the screw spindle (5);
- the bolt (9) possesses a guide pin (10) for engaging in a connecting link (21) located in the base plate (3);
- the control lever (22) is pivotally connected to an auxiliary lever (25) which has a working surface co-operating in the actuated condition with the unlatching slider (20) in the sense of a mutual obstruction; and
- the connecting link (21) possesses recesses for various positions of the switching device (2) in the withdrawable frame (1) and cams for automatically resetting the control lever (22) and the unlatching slider (20) when the switching device (2) moves.

6. Switching device according to claim 1, characterised in that, for actuating the releasing element (29), a driver (34) is provided which is matched to the profile of the head (7) of the screw spindle (5) on the operating side and which can be positively acted upon by the tool.

7. Switching apparatus according to claim 1, characterised in that the releasing element is constructed as a slider (29) arranged parallel to the screw spindle (5), and can be moved by means of a guide rod (33) which is guided, so that it can be displaced in a straight line, in a permanently installed cross-member (4) serving as a female part for the screw spindle (5), and in a movable cross-member (4) forming a support of the screw spindle (5).

8. Switching apparatus according to claim 7, characterised in that the releasing element (57) of the withdrawable frame (1) has a cam (56) in which there engages a peg (55) of a pressure piece (52) mounted on the movable cross-member (4) so that it can be swivelled, and in that a lug (53) of the pressure piece (52) of a working surface (54) of an auxiliary releasing element (50) which is arranged parallel to the releasing element (57) and is guided so that it can be displaced, is arranged opposite in such a way that displacement of the releasing element (57) is converted into an oppositely directed movement of the auxiliary releasing element (50).

9. Switching apparatus according to claim 8, characterised in that the cam is constructed as an approximately quadrant-shaped slot (56).

10. Switching apparatus according to claim 7, characterised in that, on the cross-member (4) serving as a female part, there is arranged an additional guidance slider (36), an angled section (40) of which overlaps the screw spindle (5), and which has an extension (43) as the support of a spring (42), the other end of which acts on the guide rod (33) to bias the releasing slider (29) towards its resting position.

11. Switching apparatus according to claim 10, characterised in that the screw spindle (5) possesses an end piece (41) without a screw thread, and the angled section (40) of the additional guidance slider (36) possesses an opening for the end piece (41) to pass through.

12. Switching apparatus according to claims 4 and 10, characterised in that the lug (35) is a component of a cross-piece (32) attached to the guide rod (33), which cross-piece is arranged so that it extends at least partly parallel to the angled section (40) of the additional guidance slider (36), and in that the cross-piece (32) possesses at least one opening as a support of the casing (46) of a flexible transfer part (45), the core (47) of which can act upon the angled section (40) of the additional guidance slider (36) with a force which endeavours to displace the releasing slider (29) in the direction of release of the switching device (2).

12. Switching apparatus according to claim 1, characterised in that the switching device (2) has in addition a coupling element (115) co-operating with a locking part (112) of an energy store, which coupling part, by means of a touch element (116) and a touch area (94) located on the positioning drive (4, 5, 6), is held in an ineffective position when the switching device (2) is coupled to the positioning drive (4, 5, 6).

14. Switching apparatus according to claim 1, characterised in that the coupling element is constructed as a rod (86; 115) which can be displaced longitudinally, and which can be driven by a direction-changing gearing (touch lever (85, 116); lever (93, 117); shaft (87, 120) arranged on the support (cross-arm 60) of the switching device (2) and co-operating with the releasing element (29; 50), and a region of variable width (b1, b2) of which engages between a permanently installed guide pin (71) of a sliding carriage (73) which can be moved in the direction of the releasing part (64) of the switching device (2) and can optionally be actuated by hand, and a pin (105) arranged on the sliding carriage (73).

15. Switching apparatus according to claim 14, characterised in that the region of variable width of the rod (115) is constructed as a mirror image to a middle line (121) extending crosswise to the longitudinal extent of the rod (115).

16. Switching apparatus according to claim 14, characterised in that the rot (115; 124) is biased by a spring (123) in the sense to displace the sliding carriage (73; 111) in the cut-out direction of the switching device, and can be moved against the force of the spring (123) by a further touch lever (116) co-operating with a permanently installed part (cross-member 6).

17. Switching apparatus according to claim 14, characterised in that, for simultaneously actuating two releasing parts (64; 112) of the switching device (2), there are provided two sliding carriages (73; 111) and two rodes (115; 124) pivotally connected together which are loaded jointly with the restoring force (spring 123).

18. Switching apparatus according to claim 14, characterised in that the sliding carriage (73; 111) is guided on a support (65; 114) which at the same time forms the support of a restoring spring (80; 122) acting upon the sliding carriage (73; 111), and which possesses at least one aperture (68) for attachment to or in the switching device (wall 61).

## Revendications

1. Dispositif de coupure électrique comportant un cadre formant tiroir (1) et un appareil de coupure (2) pouvant être inséré dans le cadre formant tiroir, et présentant les caractéristiques suivantes:
   – l'appareil de coupure (2) possède un dispositif d'entraînement encliquetable utilisé pour actionner son dispositif à contacts;
   – le cadre formant tiroir (1) est équipé d'un dispositif de commande de déplacement (4, 5, 6) qui peut être accouplé à l'appareil de coupure (2) et qui comporte une broche filetée (5) pour déplacer l'appareil de coupure;
   caractérisé par les caractéristiques suivantes:
   – sur le cadre formant tiroir (1) se trouve disposé un organe de libération (89) pouvant être actionné par l'outil prévu pour commander la broche filetée (5);
   – sur l'appareil de coupure (2) se trouve disposé un organe d'accouplement (86, 115), qui coopère d'une part avec un organe de libération du dispositif d'encliquetage du dispositif d'entraînement et d'autre part avec l'organe de libération.

2. Dispositif de coupure suivant la revendication 1, caractérisé par le fait qu'un dispositif d'encliquetage (22; 27) pouvant être libéré par le dispositif de commande de déplacement (4, 5, 6) pour son rappel est associé à l'organe de libération (23).

3. Dispositif de coupure suivant la revendication 2, caractérisé par le fait que le dispositif d'encliquetage de l'organe de libération (29) situé sur le cadre formant tiroir (1), comporte un organe de blocage (27), que peut faire pivoter un poussoir de déblocage (20), utilisé pour libérer le dispositif de commande de déplacement (4, 5, 6), dans la trajectoire de déplacement de l'organe de libération (29).

4. Dispositif de coupure suivant la revendication 3, caractérisé par le fait que l'organe de blocage est réalisé sous la forme d'un ressort à lame (27) possédant une languette (28) qui s'étend obliquement par rapport à la direction de déplacement de l'organe de libération (29), et que cet organe de libération (29) est relié à un bec (35) pouvant être repoussé par dessus la languette (28).

5. Dispositif de coupure suivant les revendications 3 et 4, caractérisé par les caractéristiques suivantes:
   – le ressort à lame (27) est monté sur un levier de commande (22) qui est guidé, au moyen d'un téton (24), dans un trou allongé (23) de la plaque de base (3) du cadre formant tiroir (1) de manière à être déplaçable dans la direction de déplacement de l'appareil de coupure (2) et à pouvoir pivoter par rapport à cet appareil;
   – le levier de commande (22) est relié par articulation à un verrou (9), qui est monté transversalement par rapport à la direction de déplacement de l'appareil de coupure (2), sur une traverse (6) utilisée comme butée pour la broche filetée (5);
   – le verrou (9) possède une tige de guidage (10) destinée à s'engager dans une coulisse (21) située dans la plaque de base (3);
   – le levier de commande (22) est relié par articulation à un levier auxiliaire (25), qui possède une surface de travail, qui coopère avec le poussoir de déblocage (20) dans le sens d'un blocage réciproque, à l'état activé; et
   – la coulisse (21) possède des évidements pour des positions différentes de l'appareil de coupure (2) dans le cadre formant tiroir (1), et des cames de commande servant à rappeler automatiquement le levier de commande (22) et le poussoir de déblocage (20) lors du déplacement de l'appareil de coupure (2).

6. Dispositif de coupure suivant la revendication 1, caractérisé par le fait que pour l'actionnement de l'organe de libération (29), il est prévu un organe d'entraînement (34), qui est adapté au profil de l'élément de tête (7), situé côté commande, de la broche filetée (5) et doit être chargé obligatoirement par l'outil.

7. Dispositif de coupure suivant la revendication 1, caractérisé par le fait que l'organe de libération est agencé sous la forme d'un poussoir (29) installé parallèlement à la broche filetée (5) et peut être déplacé au moyen d'une barre de guidage (33), qui est guidée de manière à être déplaçable selon un mouvement rectiligne dans une traverse fixe (4) utilisée comme élément mère pour la tige filetée (5) et dans une traverse mobile (4) formant une butée de la tige filetée (5).

8. Dispositif de coupure suivant la revendication 7, caractérisé par le fait que l'organe de libération (57) du cadre formant tiroir (1) comporte une came de commande (56), dans laquelle s'engage un téton (55) d'un élément de pression (52) monté pivotant sur la traverse mobile (4), et qu'un bec (53) de l'élément de pression (52) est disposé en vis-à-vis d'une surface de travail (54) d'un organe auxiliaire de libération (50), disposé parallèlement à l'organe de libération (57) et guidé en déplacement, de sorte qu'un déplacement de l'organe de libération (57) est converti en un déplacement antagoniste de l'organe auxiliaire de libération (50).

9. Dispositif de coupure suivant la revendication 8, caractérisé par le fait que la came de commande est réalisée sous la forme d'une fente (56) possédant approximativement la forme d'un quart de cercle.

10. Dispositif de coupure suivant la revendication 7, caractérisé par le fait que sur la traverse (4) utilisée comme élément mère se trouve disposé un poussoir d'asservissement (36) dont une partie coudée (40) s'engage par-dessus la broche filetée (5) et possède un prolongement (43) formant butée pour un ressort (42), dont l'autre extrémité agit de manière à précontraindre le poussoir de libération (29) dans sa position de repos sur la barre de guidage (33).

11. Dispositif de coupure suivant la revendication 10, caractérisé par le fait que la broche filetée (5) possède une partie d'extrémité non filetée (41) et que la partie coudée (40) du poussoir d'asservissement (36) possède une ouverture permettant le passage de la partie d'extrémité (41).

12. Dispositif de coupure suivant les revendications 4 et 6, caractérisé par le fait que le bec (35) fait partie d'un élément transversal (32), qui est monté sur la barre de guidage (33) et est disposé de manière à s'étendre au moins partiellement parallèlement à la partie coudée (40) du poussoir d'asservissement (36), et que l'élément transversal (32) possède au moins une ouverture formant butée de l'enveloppe (46) d'un organe de transmission flexible (45), dont l'âme (47) peut charger la partie coudée (40) du poussoir d'asservissement (36), avec une force, qui tend à déplacer le poussoir de libération (29) dans le sens de la libération de l'appareil de coupure (2).

13. Dispositif de coupure suivant la revendication 1, caractérisé par le fait que l'appareil de coupure (2) comporte en outre un organe d'accouplement (115), qui coopère avec un organe d'encliquetage (112) d'un accumulateur d'énergie et est maintenu dans une position inactive au moyen d'un organe de manœuvre (116) et d'une surface de manœuvre (94) située sur le dispositif de commande de déplacement (4, 5, 6), lorsque l'appareil de coupure (2) est accouplé à ce dispositif (4, 5, 6).

14. Dispositif de coupure suivant la revendication 1, caractérisé par le fait que l'organe d'accouplement est réalisé sous la forme d'une barre (86; 115) déplaçable longitudinalement, qui peut être entraînée par un mécanisme de renvoi (levier de manœuvre (85; 116); levier (93, 117); arbre (87, 120)), qui est disposé sur le socle (support transversal 60) de l'appareil de coupure (2), coopère avec l'organe de libération (29; 50) et s'engage par une partie de largeur variable (b1, b2) entre une tige fixe de guidage (71) d'un coulisseau (73), pouvant être déplacé en direction de l'organe de libération (64) de l'appareil de coupure (2) et pouvant être actionné au choix manuellement, et une tige (75) située sur le coulisseau (75).

15. Dispositif de coupure suivant la revendication 14, caractérisé par le fait que la partie de largeur variable de la barre est symétrique par rapport à un axe médian (121) qui s'étend transversalement par rapport à la direction longitudinale de la barre (115).

16. Dispositif de coupure suivant la revendication 14, caractérisé par le fait que la barre (114; 124) est précontrainte par un ressort (123) dans le sens d'un déplacement du coulisseau (73; 111) dans le sens d'une déconnexion de l'appareil de coupure et peut être déplacée, à l'encontre de la force du ressort (123), par un autre levier de manœuvre (116), qui coopère avec une partie fixe (traverse 6).

17. Dispositif de coupure suivant la revendication 14, caractérisé par le fait que pour l'actionnement simultané de deux organes de libération (64; 112) de l'appareil de coupure (2), il est prévu deux coulisseaux (73; 111) et deux barres (115; 124) reliées entre elles par articulation, ces éléments étant chargés en commun par le ressort de rappel (ressort 123).

18. Dispositif de coupure suivant la revendication 14, caractérisé par le fait que le coulisseau (73; 111) est guidé sur un support (65; 114), qui forme simultanément la butée d'un ressort de rappel (80; 122) accroché au coulisseau (73; 111), et possède au moins une ouverture de passage (67) pour la fixation sur ou dans l'appareil de coupure (paroi 61).

**FIG 1**

**FIG 5**

FIG.2

FIG.3

EP 0 227 586 B1

FIG 4

FIG 6

FIG 7

FIG 14

81 →

112
113
111
80
66
114
64
84
81 →
110
73
80
96
124
125
122
115
123
97
116

FIG 8

b1
102
121
b2

FIG 15

115 (124)

113
112
110
115
124
86
96
90
117
126 120 116
91

FIG 9

FIG 10

FIG 11

FIG 12

FIG 13